# EUROPEAN PATENT APPLICATION

(11) **EP 4 556 449 A1**
(43) Date of publication of application: **21.05.2025**
(21) Application number: 23210744.1
(22) Date of filing: 17.11.2023
(51) Int. Cl.: C04B 26/26

(54) **RECYLED ASPHALT PAVEMENT REJUVENATOR AND SOFTENER**

(71) Applicant: Nederlandse Organisatie voor toegepast-natuurwetenschappelijk Onderzoek TNO, 2595 DA 's-Gravenhage (NL)
(72) Inventor: TABAKOVIC, Amir, 2595 DA 's-Gravenhage (NL); LEEGWATER, Greetje Aletta, 2595 DA 's-Gravenhage (NL); VAN VLIET, Dave, 2595 DA 's-Gravenhage (NL)
(74) Representative: V.O.

(57) **Abstract**

Embodiments pertain to a rejuvenator and/or softening composition for recycled asphalt pavement. The rejuvenator is bio-based, and contains a lipid component.

## Description

### Field

The invention pertains to bitumen modification, e.g. to bitumen rejuvenator compounds and bitumen softening compounds.

### Introduction

Bitumen is a material having numerous applications and is generally obtained as the heaviest portion from the oil distillation process as the residue left over from petroleum distillation.

Aged bitumen is often rejuvenated. Rejuvenators for bitumen are products designed to restore original properties to aged (oxidized) asphalt binders by restoring the original ratio of asphaltenes to maltenes.

Pavements continually oxidize during their performance life, and may also age due to other causes, leading to durability issues as a result of increased stiffness, brittleness, and a lower ability to relax stress. Similar considerations apply to other uses of bitumen.

Bitumen rejuvenators can help to restore the performance in a wide range of pavement types and in pavement preservation applications and other bitumen applications.

Reclaimed (or recycled) asphalt pavement (RAP) material includes asphalt that has been milled or excavated or crushed from existing asphalt pavements or returned from job sites, which is then blended with fresh asphalt mixture and other additives such as rejuvenators.

There is a desire for further good rejuvenators.

Tabakovic et al, Appl. Sci. 2022, 12(7), 3648; https://doi.org/10.3390/app12073648, describes conductive alginate capsules encapsulating a bitumen rejuvenator that can be used as a self-healing asphalt technology which reinforces the asphalt pavement. A vegetable oil of 0.9 g/cm3 density at room temperature (20 ± 3 °C) was used, forming a bitumen healing agent solution.

A further reference is Tabakovic, Eng. Proc. 2023, 36, 27, describing a study wherein microalgae oil was used as an aged bitumen rejuvenator.

### Summary

The invention provides in an aspect the use of microalgae lipids for rejuvenating or softening a bitumen-containing composition which comprises bitumen and mineral aggregate. Preferably the microalgae lipids are provided as microalgae biomass. Preferably the microalgae lipids contain both an oil component that is liquid at 25°C and a fat component that is solid at 25°C. Preferably, the use is for rejuvenating reclaimed asphalt pavement. Preferably the reclaimed asphalt pavement comprises aged bitumen and mineral aggregate.

In an embodiment, the use is for softening reclaimed asphalt pavement; wherein preferably the reclaimed asphalt pavement comprises aged bitumen and mineral aggregate. For example, the microalgae lipids are provided as microalgae oil that is liquid at 25°C.

Also provided is a mixture comprising reclaimed asphalt pavement component and microalgae lipids. Preferably the composition comprises mineral aggregate.

Also provided is a method of rejuvenating reclaimed asphalt pavement (RAP), the comprising: preferably preheating the rejuvenator and RAP, as separate components, to at least 120°C, or at least 140°C, or at least 150°C, and e.g. max. 200°C; including the, preferably preheated, RAP and a rejuvenator comprising microalgae lipids or microalgae biomass, in a mixture, and the mixture is heated to a temperature of at least 120°C, or at least 140°C, or at least 150°C, combining the mixture with at least mineral aggregate, and preferably also with fresh bitumen, filler and drip inhibitor, to form an asphalt mixture.

Embodiments pertain to a rejuvenator and/or softening composition for recycled asphalt pavement. The rejuvenator is bio-based, and contains a lipid component.

### Brief description of the drawings

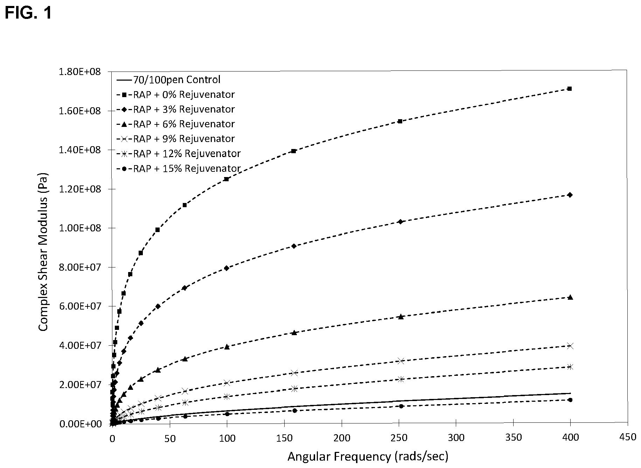

Figure 1 shows results of a dynamic shear rheometer test employed to investigate mechanical performance of blends in Example 1.

Any embodiments illustrated in the figures are examples only and do not limit the invention.

### Detailed description

The present inventors found, in an aspect, that microalgae lipids are suitable for rejuvenation of reclaimed asphalt pavement (RAP). Therefore, the invention pertains, in an aspect, to the use of microalgae lipids for bitumen rejuvenation, e.g. for rejuvenation of a bitumen-comprising composition. The invention also pertains to a method of rejuvenating bitumen, the method comprising combining a bitumen-comprising composition with microalgae lipids.

As used herein, lipids include triglycerides (fatty acids) and oil. In particular, a combination of fatty acids and oil both derived from microalgae is used as rejuvenator in the invention. Oil refers to lipid compounds that are liquid at 25°C. Fatty acids (or fats) refer to lipid compounds that are solid at 25°C. Preferably, a combination of oil and fat is used as rejuvenator, obtained from microalgae; in particular mixture comprising such microalgae oil and microalgae fatty acids.

An advantage of using such a mixture or combination of both oil and fat as the microalgae lipids used as rejuvenator, is that the preparation method of the rejuvenator does not need to include a step of oil/fat separation. This makes the bio-rejuvenation production process more efficient, environmentally friendly and more economical.

The microalgae lipids preferably include (comprise) one or more of the following compounds: 1) waxes, terpenoids and glycerolipids (i.e. polar compounds) and 2) fatty acids, chlorophylls, glycolipids and phospholipids (non-polar lipids). Preferably, the microalgae lipids include one or more compounds selected from the group consisting of waxes, terpenoids and glycerolipids; and one or more compounds selected from the group consisting of fatty acids, chlorophylls, glycolipids and phospholipids. In an example embodiment, the rejuvenator, preferably the microalgae lipid component, comprises waxes and terpenoids and glycerolipids and fatty acids and chlorophyll, preferably chlorophyll a, and glycolipids and phospholipids.

The lipids may include: fatty acids, in particular polyunsaturated fatty acids (PUFA) such as, for example, C18:2-n6 and C20:5-n3 (eicosapentaenoic acid: EPA), but also as monosaturated fatty acids, such as, for example, C16:1-n7 and C18:1-n9 fatty acids. Preferably the lipids include chlorophyll, more preferably chlorophyll a.

It is noted that the lipids used in the invention can alternatively be described purely in terms of their composition and/or molecular weight properties.

The microalgae lipids have, for example, a Mw in the range of from 500 to 1500 dalton, and for example an Mn in the range of 700 from 1500 dalton, as measured with GPC. The polydispersity index Mw/Mn is, for instance, in the range 1.0 - 1.2.

The RAP comprises mineral aggregate and aged bitumen.

It was observed by the present inventors that the microalgae lipids are capable to regenerate RAP, in particular aged bitumen in RAP, by restoring its chemical structure, in particular the desired ratio of asphaltenes to maltenes, and restoring the mechanical properties.

Performance comparable to commercial rejuvenator for RAP was achieved in experiments, such as show in the Examples of the present application.

In a further embodiment, microalgae biomass is used as the rejuvenator, i.e. without a need for a lipids or oils extraction process. In particular, the microalgae biomass is as such mixed with RAP. Herein, the microalgae biomass contains the microalgae lipids (fats and oils) and preferably one or more selected from proteins, carbohydrate, and mineral components. The biomass contains, e.g. chlorophyll, e.g. chlorophyll a. Preferably, the biomass as mixed with RAP contains these components. It is to be noted that the lipids and biomass may, additionally or alternatively, be described in terms of their composition, i.e. as a rejuvenator comprising lipids and chlorophyll a, carbohydrates, proteins, and preferably mineral components.

The microalgae biomass contains, for example, one or more of the following:
a. ash (mineral components), e.g. at least 1.0 wt.% and/or up to 25 wt.%; e.g. 5-17 %;
b. carbohydrate, e.g. at least 10 wt.% and or up to 60 wt.%, e.g. 15-50 wt.%;
c. protein, e.g. at least 10 wt.% and/or up to 60 wt.%, e.g. 15 to 50 wt. %,
d. lipids, e.g. at least 5 wt.% or at least 10 wt.%, e.g. up to 60 wt.%, e.g. 10 to 50 wt.%. The amounts are preferably on dry basis or for the dried biomass.

Preferably, the microalgae biomass is subjected to water removal, e.g. drying, and the dried microalgae biomass is combined with RAP and used as rejuvenator.

The microalgae biomass has, for example, a Mw in the range of from 200 to 500 dalton, and for example an Mn of in the range of from 200 to 500 dalton, as measured with GPC. The polydispersity index Mw/Mn is, for instance, in the range 1.0-1.1.

It was also found that microalgae oil or lipids, optionally provided as microalgae biomass, can be used as softener for bitumen. Hence, the invention also provides the use of microalgae biomass, as softener for bitumen, e.g. to reduce the softening point. Also provided is a method of softening a bitumen-comprising composition, the method involving combining the bitumen-comprising composition with microalgae oil or lipids, which are optionally provided as microalgae biomass.

In this embodiment of the invention, it is possible to use microalgae oils, i.e. selectively lipid components that are liquid at 25°C.

Otherwise, preferences and details for the microalgae lipids and microalgae biomass are the same as described in connection with bitumen rejuvenation.

Optionally, the microalgae lipids contain, for example, both oil components which are liquid at 25°C and fat components which are solid at 25°C; wherein the oil and fat component both originate from microalgae.

All preferences and details discussed in connection with the use for rejuvenating bitumen and RAP and the method of rejuvenating RAP, apply also for the use as a softener for bitumen, in particular as to the microalgae lipids and microalgae biomass.

Microalgae as used herein refers to phytoplankton, having a size (e.g. diameter) smaller than 1.0 mm, typically smaller than 600 µm, or smaller than 200 µm, or smaller than 100 µm, or smaller than 50 µm, or even smaller than 20 µm, and e.g. larger than 0.10 µm, e.g. having at least two dimensions smaller than 1.0 mm or smaller than said sizes. They can also be referred to as microphytes. An example microalgae species is *Nannochloropsis oceanica. Nannochloropsis* are spherical with a typical diameter of 2 to 3 µm. *Nannochloropsis* has an ability to accumulate advantageous high levels of fatty acid, in particular polyunsaturated fatty acids.

The invention also provides a method for rejuvenating RAP using microalgae lipids or biomass as rejuvenator. Preferences and details for the composition of the RAP and for the rejuvenator are as discussed in connection with the uses. In the method, the rejuvenator and RAP are optionally preheated separately to at least 120°C or at least 140°C or at least 150°C, e.g. to a temperature below 200°C. The rejuvenator and RAP are included in a mixture, and the mixture is heated to a temperature of at least 120°C, or at least 140°C, or at least 150°C, e.g. to a temperature below 200°C, for a duration of at least 10 minutes, or at least 30 minutes. This method is preferably also used in the uses of the invention and in the method of rejuvenating RAP.

Subsequently the RAP + rejuvenator mixture is combined with at least mineral aggregate, and preferably also with fresh bitumen, filler and drip inhibitor, to form an asphalt mixture. The resulting asphalt mixture can be compacted to achieve desired density and void fraction.

The asphalt mixture may comprise further components.

Preferably, the method comprises mixing the rejuvenator with the RAP under heating, e.g. at a temperature of at least 100°C or at least 120°C.

The invention provides, in an example embodiment, a method involving: pre-heating RAP, that is optionally dried, at a temperature of at least 100°C, at least 120°, preferably at least 140°C, e.g. at least 160°C, e.g. for at least 1 minute or at least 5 minutes, mixing the RAP with rejuvenator composition, in a moving mixer, and further heating of the mixture at e.g. at least 100°C, at least 120°C, or preferably at least 140°C or at least 160°C. The rejuvenator composition comprises microalgae lipids, e.g. as biomass, and optionally comprises a mixture of bitumen (e.g. virgin bitumen) with the microalgae lipids. Preferably the rejuvenator is pre-heated to at least 100°C, at least 120°C, preferably at least 140°C, e.g. at least 160°C prior to mixing with the RAP.

The method preferably further comprises combining the heated RAP + rejuvenator mixture with at least mineral aggregate, preferably also with fresh bitumen, filler and drip inhibitor, to form an asphalt mixture. The mineral aggregate is preferably pre-heated, preferably to substantially the same temperature as the heated RAP + rejuvenator mixture (e.g. within 10°C), and/or to a temperature of at least 120°C, or at least 140°C, or at least 150°C, e.g. to a temperature below 200°C.

The resulting asphalt mixture is optionally compacted to achieve desired density and void fraction.

The inventive methods yield, as asphalt mixture, e.g. stone mastic asphalt (SMA), e.g. a composition comprising coarse aggregate, filler, binder, and fibre. The SMA composition comprises e.g. at least 60 wt.%, e.g. 60 to 90 wt,% mineral aggregate, preferably coarse aggregate, and preferably at least 5 wt.% and/or up to 15 wt.% filler. Coarse aggregate has e.g. a diameter of at least 5 mm or at least 10 mm. The SMA contains e.g. at least 5 wt.% and/or up to 10 wt.% bitumen. The composition comprises e.g. at least 0.1 and/or up to 1.0 wt.% fibre. Preferably such a asphalt mixture is also the result of the uses and of the inventive method. Preferably, the inventive uses for rejuvenating RAP involve combining RAP and the inventive rejuvenator (microalgae lipids or biomass), and including these components in the asphalt mixture. Preferably, RAP and rejuvenator are mixed and heated to activate the rejuvenator and subsequently included in the asphalt mixture. The asphalt mixture is preferably rejuvenated asphalt mixture.

The invention also provides a composition, in particular a mixture, comprising such an asphalt mixture, e.g. stone mastic asphalt (SMA), and microalgae lipids, e.g. microalgae biomass containing lipids.

In example embodiments, the method comprises providing the RAP. The method comprises e.g. removing asphalt pavement from a road surface, and comminuting the pavement (i.e. size reduction, such as grinding). In an embodiment, the method comprises size reduction (e.g. grinding) RAP to provide the RAP feedstock.

In example embodiments, the method comprises providing the microalgae lipids. Optionally, the method comprises extracting the microalgae lipids from microalgae biomass. In an example embodiments, the method comprises providing the biomass. Optionally, the method comprises harvesting microalgae, and draying raw microalgae biomass to provide the microalgae biomass that is used as rejuvenator as such or that is subjected to lipid extraction.

There are significant differences between bitumen terminology in Europe and the United States. Whereas in Europe the terms "bitumen" or "asphaltic bitumen" are used, the same material is referred to as "asphalt", "asphalt cement" or "asphalt binder" in the United States. In order to avoid confusion, the European terminology will be adhered to in this application.

Hence, as used herein, asphalt comprises bitumen and mineral aggregate; whereas bitumen as such does not typically include granular mineral particles.

Bitumen comprises typically naphthene aromatic compounds, polar aromatic compounds, saturated hydrocarbons, and asphalthenes.

Naphthene aromatics compounds may comprise partially hydrogenated polycyclic aromatic compounds. The polar aromatic compounds may comprise high molecular weight phenols and carboxylic acids. The asphaltenes may comprise high molecular weight phenols and heterocyclic compounds.

The bitumen for example contains between 5 and 25% by weight of asphaltenes dispersed in 90% to 65% by weight of n-alkane (pentane or heptane)-soluble molecular components.

The mineral aggregate preferably comprises one or more components selected from the group consisting of sand, gravel, crushed stone, slag, and recycle concrete.

The composition comprises e.g. at least 10 wt.% or at least 50 wt.% of said mineral aggregate, based on total weight of the total composition, in particular on the basis of the asphalt aggregate composition.

The total amount of bitumen in the rejuvenated composition, e.g. stone mastic asphalt obtained after the rejuvenation, is e.g. at least 4.0 wt.% or at least 5.0 wt.%, e.g. up to 10 wt.%.

As used herein, a step of combining a bitumen-comprising material with microalgae lipids, e.g. provided as microalgae biomass, involves combining said components in to a mixture, preferably under heating of followed by heating of the mixture, wherein heating involves applying a temperature of preferably at least 100°C or at least 120°C or at least 140°C.

Preferences for the use also apply to the product and the method. The rejuvenating method preferably gives a product as described, in particular the asphalt mixture.

Also provided is a mixture comprising reclaimed asphalt pavement component and microalgae lipids. Preferably the composition comprises mineral aggregate. Preferences for the reclaimed asphalt component and for the microalgae lipids are as discussed in connection with the uses and method. Preferably, the composition comprises rejuvenated reclaimed asphalt pavement The mixture can be obtained with the inventive method and uses.

### Examples

The invention will now be further illustrated by the following non-limiting examples. These examples do not limit the invention and do not limit the claims.

### Example 1

Bitumen was extracted from RAP using the European Standards EN 12697 (Bituminous Mixtures - Test Methods for Hot Mix Asphalt - Part 1: Soluble Binder Content and Bituminous mixtures - Test methods - Part 3: Bitumen recovery: Rotary evaporator).

The RAP binder content was 4.1 % of total RAP weight.

In order to determine optimum content of microalgae lipid rejuvenator in RAP mix, i.e. amount of lipids that will rejuvenate aged RAP bitumen to match neat (fresh) bitumen properties, extracted RAP bitumen was blended with varying amounts of microalgae lipid in amounts of 3% - 15% by weight.

The DSR (dynamic shear rheometer) test was employed to investigate mechanical performance of the blends. Error! Reference source not found. illustrates the test results. The results show that microalgae lipids can rejuvenate aged bitumen.

### Example 2

Stone mastic asphalt mix with rejuvenated RAP was prepared using three types of rejuvenator: commercially available rejuvenator, microalgae lipids, and microalgae biomass.

A stone mastic asphalt mix (SMA 11B) containing 30% Recycled Asphalt Pavement (RAP) was used. **Table 1** shows the SMA 11B + 30% RAP mix composition. A bitumen extraction showed that bitumen content of the RAP content is 4.10% by weight. The total bitumen content (RAP bitumen + rejuvenator + fresh/virgin bitumen) in the mix was 6.6 wt.%. Target void content in the mix was 5.5%.

For the mix containing microalgae biomass the drip inhibitor was omitted from the mix because it was expected that biomass residue will act as bitumen absorbent in the mix.

**Table 1 - SMA 11B asphalt composition**

| SMA 11B asphalt composition (mix % by weight) | |
|---|---|
| Constituent | wt.% |
| Mineral aggregate (stone) 8/11 | 49.9 |
| Stone 4/8 | 1.0 |
| Sand (0/2) | 9.05 |
| Filler 0/0 | 4.50 |
| Drip inhibitor | 0.30 |
| RAP (porous asphalt 5/8) | 30.00 |
| Bitumen (70/100pen) | 5.10 |
| Aged (RAP) Bitumen Rejuvenator | 0.15* |

| | |
|---|---|
| * : on the basis of lipids. | |

The rejuvenation of the RAP material (bitumen) was carried out with a method involving the following steps:
1. Moisture was removed from the RAP (dried) by placing the RAP material in an oven at 40°C for 24 hours.
2. After drying, the RAP material was placed in the oven at the asphalt mixing temperature of 160°C for 2 hours.
3. Once RAP material is thoroughly heated, it was placed in the asphalt mixer and rejuvenator was added.
4. After mixing, the rejuvenated RAP mix (i.e. RAP + rejuvenator, with the rejuvenator either microalgae lipids or microalgae biomass) was removed from the mixer and placed back in to the oven at the asphalt mix temperature (160°C) for 2 hours in order to reach full asphalt mix temperature.
5. Subsequently the RAP + rejuvenator mixture was combined with the other components, in particular the mineral aggregate, fresh bitumen, filler and drip inhibitor, to form the asphalt mixture, in particular the stone mastic asphalt mix.

Note: the other components of step 5), i.e. the mineral aggregate, fresh bitumen, and filler, are also pre-heated at 160°C.
Note: Commercial rejuvenating oil and microalgae lipids were not preheated.

**Table 2** shows that the bulk density and void fraction were comparable to the reference rejuvenator.

**Table 2**

| SMA 11B mix with and without RAP - bulk density values | | |
|---|---|---|
| Mix | Bulk density (1000 kg/m³) | Void content (%) |
| SMA 11B + 30% RAP - commercially available bio-rejuvenator (reference) | 2.31 | 7.7 |
| SMA 11B + 30% RAP - Microalgae lipids as rejuvenator | 2.35 | 6.2 |
| SMA 11B + 30% RAP - Microalgae biomass as rejuvenator | 2.33 | 6.9 |

**Table 3** shows the indirect tensile strength (ITS) of SMA 11B + 30%RAP with, respectively, a commercial rejuvenator as reference, microalgae lipids, and microalgae biomass. Comparable ITS was achieved for the inventive microalgae rejuvenator. The test was done in accordance with NEN EN 12697-23. Three test specimens of the each mix (total 9 specimens) were conditioned, in a temperature control chamber, prior to the test for 4 hours at 15°C. The ITS test applies a vertical compressive strip load at a constant loading rate, in this case 50 mm/min, to the cylindrical specimen.

**Table 3**

| | Reference | Microalgae Biomass | Microalgae Lipids |
|---|---|---|---|
| ITS (MPa) | 1.13 | 1.24 | 1.13 |

**Table 4** shows the indirect tensile strength ratio (ITSR) of SMA 11B + 30%RAP with, respectively, a commercial rejuvenator as reference, microalgae lipids, and microalgae biomass. Comparable ITSR was achieved for the inventive microalgae rejuvenator, exceeding the target minimum ITSR of 80%.

The ITSR test was performed in accordance with NEN EN 12697-12. For each mix, six specimens were prepared. The specimens were then divided into two subsets of three. One set was stored in the laboratory at room temperature, 20 ± 3°C, and the second set was placed under distilled water and subjected to a vacuum of 6.7 kPa for 30 min. After conditioning in vacuum, the second set was placed into a water bath at 40°C for 72 h. Both sets of test specimens were then conditioned at a test temperature of 15°C for four hours prior to testing. The dry set was conditioned in a temperature-controlled air chamber, and the wet set conditioned in a temperature-controlled water bath.

**Table 4**

| | Reference | Microalgae Biomass | Microalgae Lipids |
|---|---|---|---|
| ITSR (%) | 83.2 | 90.9 | 112.2 |

The results indicate that microalgae lipids and biomass are effective bitumen rejuvenators in an asphalt mix and perform comparable to a commercial rejuvenator. Mixtures successfully recover their strength and even outperform the control mix - asphalt mix containing commercially available rejuvenator.

### Example 3

Using bitumen - lipid mixtures (lipids as 3% of the sample weight, e.g., 97g aged bitumen and 3g microalgae lipids), the use of microalgae lipids as a softener for aged bitumen was tested. As shown in **Table 5,** a softening was achieved, based on pen value test results (NEN-EN-1426). This results indicate potential of the microalgae lipids as hard bitumen softener.

**Table 6** shows a reduction in the softening temperatures for the same samples based on a ring and ball test (NEN-EN-1427). Results indicate softening of the aged bitumen with addition of microalgae lipids, where the softening point is lower than aged bitumen, nevertheless it shows the improvement in the softening of the hard bitumen.

Bitumen ageing: Fresh 70/100pen bitumen was hardened, the goal was to simulate 15 years of bitumen ageing. One kilogram of bitumen was poured into a stainless steel tray lined with greaseproof paper. The thickness of the bitumen layer in the tray was 10mm. The tray was then placed in a forced air draft oven and subjected to two step ageing process: step 1: 4 hours at 135°C; step 2: 4 days at 85°C. Because the bitumen ageing was insufficient following steps 1 and 2; we extended step 2 by an additional 16 days.

Bitumen Blending: Blends containing 70/100pen aged bitumen, microalgae lipids and a blend containing microalgae biomass were made. The blends were prepared by adding rejuvenating lipids, 3% by weight, to aged bitumen. The microalgae biomass blend was designed according to the lipid content in the microalgae biomass. The microalgae biomass lipid analysis was tested according to the Folch method (Axelsson, M. and F. Gentili, A Single-Step Method for Rapid Extraction of Total Lipids from Green Microalgae. PLOS ONE, 2014. 9(2): p. e89643; Folch J, Lees M, Stanley GHS, The Journal of Biological Chemistry 226: 497-509)

The analysis demonstrated that dry weight biomass lipid content is 20% and moisture content is 70%.

Blends: 194 g bitumen was blended with 6 g microalgae oil.

The low shear blending was adopted for the blends preparations. The blend sample preparation process began by heating blend constituents, aged 70/100pen bitumen and rejuvenating oil, separately at 160°C for 30 minutes before blending. Once the bitumen and oil reached 160°C, the bitumen was placed on a temperature controlled hot plate and the oil was added to the bitumen. The blending temperature was held constant at 160°C and mixed for 30 minutes at 600RPM.

**Table 5**

| Sample | Penetration (mm) |
|---|---|
| 70/100pen Neat Bitumen | 86.2 |
| 70/100pen Aged Bitumen | 43.0 |
| 70/100pen Aged Bitumen + Microalgae Lipids | 53.1 |

**Table 6**

| Sample | Average Softening Point (°C) |
|---|---|
| 70/100pen Neat Bitumen | 46.0 |
| 70/100pen Aged Bitumen | 53.1 |
| 70/100pen Aged Bitumen + Microalgae Lipids | 50.5 |

## Claims

1. Use of microalgae lipids for rejuvenating or softening a bitumen-containing composition which comprises bitumen and mineral aggregate.

2. The use according to claim 1, wherein the microalgae lipids are provided as microalgae biomass.

3. The use according to claim 1 or 2, wherein the microalgae lipids contain both an oil component that is liquid at 25°C and a fat component that is solid at 25°C.

4. The use according to claim 3, wherein the use is for rejuvenating reclaimed asphalt pavement.

5. The use according to claim 4, wherein the reclaimed asphalt pavement comprises aged bitumen and mineral aggregate.

6. The use according to claim 1, wherein the use is for softening reclaimed asphalt pavement; wherein preferably the reclaimed asphalt pavement comprises aged bitumen and mineral aggregate.

7. The use according to claim 6 wherein the microalgae lipids are provided as microalgae oil that is liquid at 25°C.

8. The use according to any of the preceding claims, wherein the bitumen-comprising composition comprises at least 60 wt.% mineral aggregate, e.g. 60 to 90 wt.% mineral aggregate
wherein the mineral aggregate is preferably coarse aggregate having a diameter of at least 5 mm or at least 10 mm,
and wherein the composition preferably comprises at least 5 wt.% and/or up to 15 wt.% filler; and preferably at least 5 wt.% and/or up to wt.% bitumen and optionally contains at least 0.1 and/or up to 1.0 wt.% fibre.

9. The use according to any of the preceding claims, wherein the microalgae lipids comprise waxes, and terpenoids and glycerolipids and fatty acids, and chlorophyll, glycolipids and phospholipids;
preferably wherein the lipids comprise C18:2-n6 and C20:5-n3 fatty acids and C16:1-n7 and C18:1-n9 fatty acids.

10. A mixture comprising reclaimed asphalt pavement component and microalgae lipids.

11. A mixture according to claim 10, wherein the composition comprises mineral aggregate.

12. A mixture according to claim 11, wherein the composition comprises coarse aggregate, filler, binder, and fibre, preferably wherein the composition comprises at least 60 wt.%, e.g. 60 to 90 wt.%, of mineral aggregate, preferably coarse aggregate, and preferably at least 5 wt.% and/or up to 15 wt.% filler, preferably at least 5 wt.% and/or up to wt.% bitumen, and preferably at least 0.1 and/or up to 1.0 wt.% fibre.

13. A method of rejuvenating reclaimed asphalt pavement (RAP), comprising:
- preferably preheating the rejuvenator and RAP, as separate components, to at least 120°C, or at least 140°C, or at least 150°C, and e.g. max. 200°C;
- including the, preferably preheated, RAP and a rejuvenator comprising microalgae lipids or microalgae biomass, in a mixture, and the mixture is heated to a temperature of at least 120°C, or at least 140°C, or at least 150°C,
- combining the mixture with at least mineral aggregate, and preferably also with fresh bitumen, filler and drip inhibitor, to form an asphalt mixture.

14. The method of claim 13, wherein asphalt mixture comprises coarse aggregate, filler, binder, and fibre, preferably wherein the composition comprises at least 60 wt.%, e.g. 60 to 90 wt.%, of mineral aggregate, preferably coarse aggregate, and preferably at least 5 wt.% and/or up to 15 wt.% filler, preferably at least 5 wt.% and/or up to wt.% bitumen, and preferably at least 0.1 and/or up to 1.0 wt.% fibre.
